# EUROPEAN PATENT APPLICATION

(11) **EP 3 674 110 A1**
(43) Date of publication of application: **01.07.2020**
(21) Application number: 19218872.0
(22) Date of filing: 20.12.2019
(51) Int. Cl.: B60C 19/00, B60C 9/18, B60C 11/00

(54) **PNEUMATIC TYRE WITH STRIPS POSITIONED BENEATH THE TREAD FOR THE REDUCTION OF THE NOISE OF PNEUMATIC TYRES**

(30) Priority: 24.12.2018 IT 201800021037; 24.12.2018 IT 201800021031
(71) Applicant: Bridgestone Europe NV/SA, 1932 Zaventem (BE)
(72) Inventor: DELLI CASTELLI, Giuseppe, 00128 Roma (IT); CIARAVOLA, Vincenzo, 00128 Roma (IT); FORTUNATO, Gaetano, 00128 Roma (IT); DI RONZA, Raffaele, 00128 Roma (IT); SABBATINI, Enrico, 00128 Roma (IT); LOMBARDI, Roberto, 00128 Roma (IT); PALUMBI, Maria Cecilia, 00128 Roma (IT); BOTTI, Francesco, 00128 Roma (IT)
(74) Representative: Marchetti, Alessio

(57) **Abstract**

The present invention relates to a tread (2) and a pneumatic tyre comprising one or more strips (4) of a material that is suitable for decreasing the noise generated by the rolling of pneumatic tyres. Said strips (4) are positioned within the underlying portion (3) of the tread (2) at the longitudinal ribs (6). The present invention also relates to a process for the manufacture of such pneumatic tyre.

## Description

### Technical field of the invention

The present invention relates to a tread and a pneumatic tyre comprising one or more strips of a material that is suitable for decreasing the noise generated by the rolling of pneumatic tyres, characterized in that said strips are positioned within the underlying portion of the tread at the longitudinal ribs. The present invention also relates to a process for the manufacture of such pneumatic tyre.

### Background

Over time, interest has greatly increased in trying to eliminate, or at least decrease, the noise generated by vehicles. Amongst the various factors that contribute to the noise generated by vehicles there is the rolling noise generated by pneumatic tyres. The external noise is generated by discontinuities of the tread pattern and by the roughness of the road which excite the structure of the pneumatic tyre. It follows, that in addition to the continuous improvement in the rolling resistance, weight and *grip* of pneumatic tyres, noise reduction is also a particularly important requirement. Such a need for noise reduction has increased for all types of pneumatic tyres, in particular for those for automobiles.

One object of the invention is to provide a low-noise-level pneumatic tyre capable of also maintaining at a high level other performance aspects of the product such as, for example, the wear resistance. It is also important that the proposed solution to decrease the noise does not negatively impact upon production processes.

### Summary

The technical problem underlying the present invention is therefore to provide a low-noise-level pneumatic tyre without changing the basic structure thereof and the production processes. The present invention aims to "filter" the energy produced by the impact of the discontinuities of the tread geometry and those produced by the roughness of the road by means of the insertion of strips of a suitable material in order to decrease the noise generated by pneumatic tyres and wherein said strips are positioned at the longitudinal ribs of the tread within the portion underlying the portion that is not in contact with the exterior.

Compared to the use of a continuous layer of material, the solution using strips is equivalent in the reduction of external noise and at the same time is lighter and better in terms of rolling resistance and durability (resistance at high speed).

A first object of the present invention is a tread for a pneumatic tyre, comprising one or more strips of a material that is suitable for decreasing the noise generated by the rolling of pneumatic tyres, and a sequence of longitudinal elements of said tread defined as ribs and interspersed with grooves, characterized in that each of said one or more strips is positioned at a respective rib.

A further object of the present invention is a tread for a pneumatic tyre, comprising a tread for a pneumatic tyre, comprising one or more polyurethane strips and a sequence of longitudinal elements of said tread defined as ribs and interspersed with grooves, characterized in that each of said one or more strips is positioned at a respective rib.

A further object of the present invention is a tread for a pneumatic tyre, comprising a tread for a pneumatic tyre, comprising one or more high damping compound strips and a sequence of longitudinal elements of said tread defined as ribs and interspersed with grooves, characterized in that each of said one or more strips is positioned at a respective rib.

A further object of the present invention is a pneumatic tyre comprising a tread as defined above.

A further object of the present invention is a process for the manufacture of a pneumatic tyre comprising the following steps:
a) preparing one or more strips of a suitable material in order to decrease the noise generated by the rolling of pneumatic tyres;
b) inserting said one or more strips into a green pneumatic tyre in such a way that, after vulcanization, each of said one or more strips is positioned at a respective rib of the tread of said pneumatic tyre.
Preferred characteristics of the invention are the subject of the dependent claims.

### Brief description of the figures

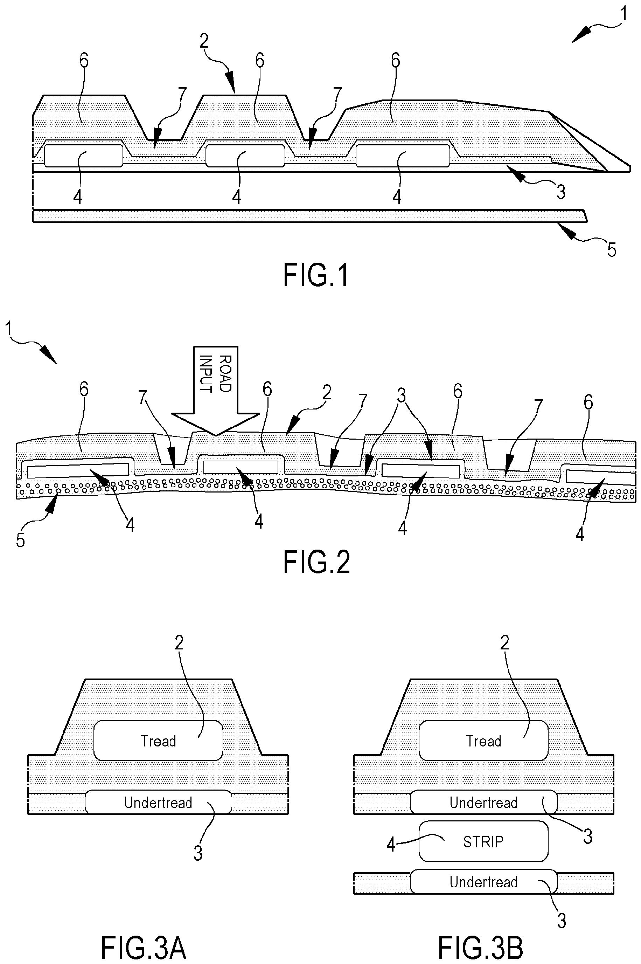

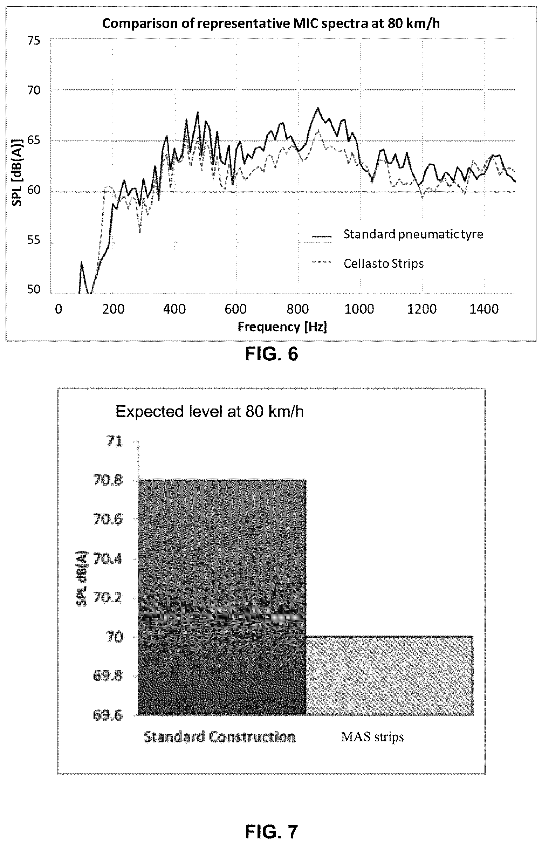

Reference will be made to the figures of the accompanying drawings, wherein:
▪ Figure 1 shows a schematic representation of a cross-sectional side-view of a part of the pneumatic tyre according to an embodiment of the present invention;
▪ Figure 2 shows a photograph of a detail of the pneumatic tyre of a cross-sectional side-view according to the embodiment of Figure 2;
▪ Figure 3 is a graph schematically showing the difference between a prior art pneumatic tyre (Figure 3A) and an embodiment of the present invention (Figure 3B).
▪ Figure 4 shows a schematic representation of the layout of the internal PBN test;
▪ Figure 5 reports the expected PBN level at 80 km/h of a standard pneumatic tyre and of a pneumatic tyre manufactured according to one embodiment of the present invention, wherein polyurethane strips are used (indicated in the figure as Cellasto strips);
▪ Figure 6 is a graph showing a comparison of the representative MIC spectra at 80 km/h of a standard pneumatic tyre and of a pneumatic tyre manufactured according to an embodiment of the present invention, wherein polyurethane strips have been used (indicated in the figure as Cellasto strips);
▪ Figure 7 reports the expected PBN level at 80 km/h of a standard pneumatic tyre (indicated in the figure as *standard construction*) and of a pneumatic tyre manufactured according to an embodiment of the present invention, wherein strips are used that consist of a high damping compound (indicated in the figure as *MAS strips*);
▪ Figure 8 is a graph that shows a comparison of the representative MIC spectra at 80 km/h of a standard pneumatic tyre (indicated in the figure as *standard construction*) and of a pneumatic tyre manufactured according to an embodiment of the present invention, wherein strips are used that consist of a high damping compound (indicated in the figure as *MAS strips*);
▪ Figure 9 is a graph that reports the results of the rolling resistance test of a standard pneumatic tyre (indicated in the figure as *standard construction*) and of a pneumatic tyre manufactured according to an embodiment of the present invention, wherein strips are used that consist of a high damping compound (indicated in the figure as *MAS strips*)*.*

### Detailed description of the invention

Consistent with the consolidated terminology in the field, within the present context: *Tread* refers to the portion of the pneumatic tyre that is in contact with the road surface. *Undertread* refers to the portion of the tread compound between the bottom of the tread grooves and the upper part of the layers of fabric that form the carcass of the pneumatic tyre. *Cap ply* refers to the upper layer of fabric of the carcass of the pneumatic tyre. The term polyurethane (PU) refers to a broad family of polymers wherein the polymer chain consists of urethane -NH-(CO)-O bonds.

Belt. The belts of the pneumatic tyre are an assembly of fabrics and/or wires used to reinforce the tread area of the pneumatic tyre.

The term Ribs refers to those parts of the tread that are separated by the grooves.

The expression "not in contact with the exterior" refers to all of the internal parts of the pneumatic tyre, i.e., not in direct contact with the external environment or with the road surface. The term *strip* refers to a portion of material bounded by two parallel edges not occupying all of the space of the tread portion wherein it is inserted.

The term high damping compound means a compound wherein the ratio between the mechanical dissipation factor (tan delta) at 0°C and the dissipation factor at 60 °C is > 4, preferably > 6.

The present invention relates to a tread 2 for a pneumatic tyre, comprising one or more strips 4 of a material that is suitable for decreasing the noise generated by the rolling of pneumatic tyres, and a sequence of longitudinal elements of said tread defined as ribs 6 and interspersed with grooves 7, characterized in that each of said one or more strips is positioned at a respective rib. Said strips are preferably inserted into one or more layers of the tread portion defined as the *undertread 3.*

According to a preferred embodiment, at each rib of the tread at least one of said strips will be positioned; in this way, as is represented, for example, in the embodiments of Figure 1 and 2, at least one strip will be present at each rib of the tread.

The dimensions of the strips will preferably be of between a thickness of 0.5 mm and 5 mm, preferably between 1 mm and 2.5 mm, whilst the width will preferably be less than the width of the rib above, plus half the width of the adjacent grooves and more than half the width of the rib. The circumferential length of the strips will, for example, be substantially equal to the length of the tread.

The present invention also relates to a pneumatic tyre comprising one or more strips inserted into the tread portion that is not in contact with the exterior, wherein each strip is positioned at the longitudinal ribs of the tread in such a way as to not form a continuous layer. The pneumatic tyre will comprise at least one strip, preferably a plurality of strips, for example two, three, four or as many as the number ribs of the tread. According to a preferred embodiment, the pneumatic tyre will comprise a strip at each rib of the tread. These strips are preferably inserted into the layer that constitutes the portion of the pneumatic tyre that is commonly defined as the *undertread.* For example with reference to the embodiments represented in Figures 1 and 2, the pneumatic tyre is generally defined with the number 1 and said one or more strips with the number 4. The strips are inserted into the *undertread* 3 layer, positioned between the tread 2 and the layer commonly defined as the *cap ply 5* or the belts within pneumatic tyres wherein the *cap ply* is not present. The strips 4 are positioned at each of the ribs 6 of the tread 2 and are therefore not in contact with one another, but spaced therebetween by a length equal to approximately the length of the grooves 7.

The pneumatic tyre 1 may comprise all of the other elements that are commonly used in the layout of these products such as, for example, a body ply, two beads, a tread belt comprising at least two plies, an innerliner and any other layers of additional functional material arranged between the innerliner and the inner cavity of the pneumatic tyre. The tread 2 may be single- or multi-compound and prepared according to processes known to a person skilled in the art. The strips 4 within the tread and pneumatic tyre according to any one of the embodiments described above will be made of a material suitable for decreasing the noise generated by the rolling of pneumatic tyres, for example from a porous material.

According to one embodiment, said strips will be made of polyurethane. The data reported in the examples and in the figures show that the solution wherein polyurethane strips are used is better in terms of noise balancing, whereas polyurethane foam has lower hysteresis (the volume being equal) compared to a conventional compound.

Said one or more polyurethane strips may have a closed- or open-cell structure, preferably the polyurethane strips will be in the form of a closed-cell elastomer, still more preferably they will be in the form of a microcellular polyurethane elastomer, in particular the polyurethane can be used that is marketed by BASF under the trade name Cellasto®.

According to a preferred embodiment, before vulcanization with the other elements of the pneumatic tyre, the polyurethane strips will be prepared from a polyurethane layer that has been pretreated with a solution of resorcinol, formaldehyde and latex (RFL). For example with a solution of resorcinol, formaldehyde, latex and ammonia in the following ratios:

| | Comp. |
|---|---|
| Latex | 100 |
| Resorcinol | 5.5 |
| Free formaldehyde | 12 |
| Ammonia | 20 |

This embodiment allows for more effective adhesion of the polyurethane, the process for the preparation of the polyurethane layer, thus treated, is described within the patent application IT 102018000007708 incorporated herein by means of reference.

According to an embodiment, said strips will be made of a high damping compound, in particular they will consist of a porous material compound, in particular of a compound wherein the ratio between the mechanical dissipation factor (tan delta) at 0 °C and the dissipation factor at 60 °C is > 4, preferably > 6.

The compound will be prepared, for example, from a mixture of styrene-butadiene copolymer (SBR), natural rubber (NR) and/or synthetic rubber (butadiene BR) with one or more additives selected from sulfur, an accelerant, silica, carbon black and a plasticizer (for example C9 resin). According to one embodiment, the styrene-butadiene copolymer (SBR) will be ≥ 50 (phr). The styrene-butadiene copolymer (SBR) may also be ≥ 60 (phr), 70 (phr), 80 (phr), 90 (phr). For example, it can be prepared according to the compounds and amounts reported in the following table. The quantities of additives added are expressed as the quantity of additive added to 100 parts of rubber.

| | **MATERIAL** | **TYPE** | **QUANTITY actual [PHR]** | **MIN QUANTITY** | **MAX QUANTITY** |
|---|---|---|---|---|---|
| POLYMER | SBR | | 100 | 100 | 100 |
| | Total filler | Silica/Carbon Black | 45 | 40 | 80 |
| | Sulfur | | 0.7 | 0.5 | 1.5 |
| | Accelerant | | 2.6 | 2 | 4 |
| PLASTICIZER | Resin | C9 | 12 | 0 | 16 |

The tread and pneumatic tyres comprising one or more strips according to any combination of the materials described herein are also the subject of the present invention.

The data reported in the examples and in the figures show that the solution wherein strips of a high damping compound are used, in addition to decreasing the noise generated by rolling, confers optimal properties to the pneumatic tyre in terms of rolling resistance and durability. A subject of the present invention is also a process for the preparation of a pneumatic tyre as described herein, comprising the following steps:
a) preparing one or more strips of a suitable material in order to decrease the noise generated by the rolling of pneumatic tyres;
b) inserting said one or more strips into the green pneumatic tyre in such a way that, after vulcanization, each of said one or more strips is positioned at a respective rib of the tread of said pneumatic tyre.

According to one embodiment of the process, said one or more strips are inserted into one or more layers of the tread portion defined as the *undertread.*

According to one embodiment, the process envisages in step a) that the strips are cut according to the dimensions of the ribs; and wherein the step b) consists of the following steps:
i) application of the cap ply layer;
ii) inserting a layer of undertread whereupon the strips are applied;
iii) covering the strips with a layer of tread and of undertread by means of coextrusion;
iv) vulcanizing the product.

The present invention has heretofore been described with reference to preferred embodiments. It is understood that there may be other embodiments which refer to the same inventive concept and which fall within the scope of the following claims.

### EXAMPLES

### EXAMPLE 1 Pneumatic tyre with strips of Cellasto®

### 1.1 Description of the preparation of the selected layer of polyurethane

For the initial polyurethane layer, a high performance microcellular polyurethane elastomer was selected that is marketed by BASF under the trade name Cellasto®. The semifinished Cellasto® has a thickness of 2.5 mm and a density of 0.6 g/cm³.

### 1.2 Preparation of polyurethane strips

The Cellasto® polyurethane layer was initially immersed with the resorcinol-formaldehydelatex solution (RFL) by means of a brush. It was then dried in an oven for 15 minutes at 120 °C in order to remove the solvent and to promote the uniform distribution of the RFL over the entire surface.

The following is the composition of the RFL solution used:

| | Comp. |
|---|---|
| Latex | 100 |
| Resorcinol | 5.5 |
| Free formaldehyde | 12 |
| Ammonia | 20 |

### 1.3 Production of the pneumatic tyre with strips of Cellasto®

An automobile pneumatic tyre was produced (Bridgestone Turanza 225/55R18) with strips of Cellasto® according to the configuration defined in Figures 1 and 2 in accordance with the following procedure: the strips of Cellasto® were cut according to the dimensions of the ribs, in particular, strips were used with a thickness of 2 mm, a width of 20 mm for the central ribs and 25 mm for the shoulder ribs. During the normal pneumatic tyre construction procedure, once the cap ply was applied, and a thin undertread layer of 0.5 mm was interposed whereupon the aforesaid strips were applied. The strips were then covered with a layer of co-extruded tread and undertread. The final product was vulcanized normally.

### 1.4 Noise emission test of the pneumatic tyre with strips of Cellasto®

The acoustic evaluation of the pneumatic tyre, produced as reported in example 1, was performed within a semi-anechoic environment for acoustic measurements. ISO certificate 3744 (Sound Power Test). The rubber was loaded by means of a pneumatic tyre support onto the drum covered in resin shells that replicate the asphalt used for the pass-by noise (PBN) approval test performed on the vehicle on the track.

The measurement setup comprised a series of angularly equally spaced microphones for evaluating the intensity and directionality of the noise, as shown below. The post-processing algorithm calculates the expected external PBN value at 80 km/h. The test described above is schematically represented in Figure 4, whilst in Figures 5 and 6 the measurements are reported in graph form that were obtained with a conventional pneumatic tyre without polyurethane strips and the pneumatic tyre produced according to example 1. The results indicate that the pneumatic tyre manufactured according to the present invention is effective in reducing external noise, in particular:
- On the basis of the sound pressure level spectrum, it is clear that it has effective insulating properties insofar as it reduces the inputs from both the geometry of the tread pattern and the roughness of the road.
- In relation to an equivalent volume of a standard compound, it reduces the overall PBN by an additional 0.4 dB.

### EXAMPLE 2 Pneumatic tyre with high damping compound strips

### 2.1 Production of the pneumatic tyre with high damping compound strips

An automobile pneumatic tyre was produced (Bridgestone Turanza 225/50R17) with high damping compound strips according to the configuration defined in Figures 1 and 2 in accordance with the following procedure: the high damping compound strips were cut according to the dimensions of the ribs, in particular, strips were used with a thickness of 2 mm, a width of 20 mm for the central ribs and 25 mm for the shoulder ribs. During the normal pneumatic tyre construction procedure, once the cap ply was applied, and a thin undertread layer of 0.5 mm was interposed whereupon the aforesaid strips were applied. The strips were then covered with a layer of co-extruded tread and undertread. The final product was vulcanized normally.

The high damping compound was prepared according to the composition reported in the table below.

| | **MATERIAL** | **TYPE** | **QUANTITY actual [PHR]** | **MIN QUANTITY** | **MAX QUANTITY** |
|---|---|---|---|---|---|
| POLYMER | SBR | | 100 | 100 | 100 |
| | Total filler | Silica/Carbon Black | 45 | 40 | 80 |
| | Sulfur | | 0.7 | 0.5 | 1.5 |
| | Accelerant | | 2.6 | 2 | 4 |
| PLASTICIZER | Resin | C9 | 12 | 0 | 16 |

### 2.1 Noise emission test

The acoustic evaluation of the pneumatic tyre, produced as reported in example 2, was performed within a semi-anechoic environment for acoustic measurements. ISO certificate 3744 (Sound Power Test). The rubber was loaded by means of a pneumatic tyre support onto the drum covered in resin shells that replicate the asphalt used for the pass-by noise (PBN) approval test performed on the vehicle on the track.

The measurement setup comprised a series of angularly equally spaced microphones for evaluating the intensity and directionality of the noise, as shown below. The post-processing algorithm calculates the expected external PBN value at 80 km/h. The test described above is schematically represented in Figure 4, whilst in Figures 7 and 8 the measurements are reported in graph form that were obtained with a conventional pneumatic tyre without high damping material strips and the pneumatic tyre produced according to example 2. The results indicate that the pneumatic tyre manufactured according to the present invention is effective in reducing external noise.

### 2.2 Rolling resistance test

The evaluation of the rolling resistance of a standard pneumatic tyre, with respect to the same with high-damping material strips inserted, was measured by means of the ISO/28580 test.

**Table of results for the rolling resistance test**

| | Standard Construction | Cellasto | High damping compound strips |
|---|---|---|---|
| RRC (the lower the better) | 6.6 | 7.5 | 6.6 |
| Percentage (the higher the better) | 100 | 87 | 100 |

## Claims

1. Tread (2) for a pneumatic tyre, comprising one or more strips (4) consisting of a high damping compound and a sequence of longitudinal elements of said tread defined as ribs (6) and interspersed with grooves (7), **characterized in that** each of said one or more strips (4) is inserted into one or more layers of the tread portion defined as the *undertread* (3) at each rib (6) and **in that** said one or more strips (4) comprise a high damping compound and have a ratio between the mechanical dissipation factor (tan delta) at 0 °C and the dissipation factor at 60 °C of greater than 4.

2. Tread (2) according to claim 1, wherein said one or more strips (4) consist of a high damping compound have a ratio between the mechanical dissipation factor (tan delta) at 0°C and the dissipation factor at 60 °C of greater than 6.

3. Tread (2) according to any one of claims 1 to 2, wherein the thickness of said one or more strips (4) is between 0.5 mm and 5 mm.

4. Tread (2) according to any one of claims 1 to 3, wherein the thickness of said one or more strips (4) is between 1 mm and 2.5 mm.

5. Tread (2) according to any one of claims 1 to 4, wherein the width of said one or more strips (4) is less than the width of said respective rib (6) or substantially identical to the width of said respective rib (6).

6. Tread (2) according to any one of claims 1 to 5, wherein said tread (2) is a multi-compound tread.

7. Tread (2) according to any one of claims 1 to 6, wherein said one or more strips are obtained from a compound comprising styrene-butadiene (SBR), natural rubber (NR) and/or synthetic rubber (butadiene BR) and one or more additives selected from sulfur, an accelerant, silica, carbon black and optionally a plasticizer.

8. Tread (2) according to claim 7, wherein said compound comprises the styrene-butadiene copolymer (SBR) from 50 to 100 (phr).

9. Tread (2) according to any one of claims 1 to 6, wherein said one or more strips are made of polyurethane.

10. Tread (2) according to any one of claims 1 to 6, wherein said one or more strips are made of polyurethane (4) and have a closed- or open-cell structure.

11. Tread (2) according to any one of claims 1 to 6, wherein said one or more strips are microcellular polyurethane elastomers.

12. Tread (2) according to any one of claims 1 to 6, wherein said one or more strips are made of polyurethane (4) treated with a solution comprising resorcinol, formaldehyde and latex (RFL).

13. Pneumatic tyre (1) comprising a tread (2) according to any of claims 1 to 12.

14. Process for the manufacture of a pneumatic tyre (1) according to claim 13 comprising the following steps:
a) preparing one or more strips (4) in a high damping compound;
b) inserting said one or more strips (4) into the green pneumatic tyre in such a way that after vulcanization each of said one or more strips (4) is positioned at a respective rib (6) of the tread (2) of said pneumatic tyre (1).

15. Process according to claim 14, wherein said one or more strips (4) are inserted into one or more layers of the tread portion defined as the *undertread* (3).
